# EUROPÄISCHE PATENTSCHRIFT

(11) **EP 3 442 816 B1**
(45) Veröffentlichungstag und Bekanntmachung des Hinweises auf die Patenterteilung: **14.09.2022**
(21) Anmeldenummer: 17717166.7
(22) Anmeldetag: 12.04.2017
(51) Int. Cl.: B60G 7/02, B60G 9/00, B60G 11/10, B62D 65/12, B62D 21/02, B62D 27/00

(54) **RAHMENSYSTEM**
FRAME SYSTEM
SYSTÈME DE CHASSIS

(30) Priorität: 15.04.2016 DE 102016107048
(43) Veröffentlichungstag der Anmeldung: 20.02.2019
(73) Patentinhaber: SAF-HOLLAND GmbH, 63856 Bessenbach (DE)
(72) Erfinder: BORDE, Florian, 63599 Biebergemünd (DE); ARPACI, Muhammet, 63768 Hösbach (DE); BERGMANN, Philipp, 63741 Aschaffenburg (DE)
(74) Vertreter: Müller Schupfner & Partner Patent- und Rechtsanwaltspartnerschaft mbB
(86) Internationale Anmeldenummer: PCT/EP2017/058835
(87) Internationale Veröffentlichungsnummer: WO 2017/178547

(56) Entgegenhaltungen:
- EP-A1- 0 773 119
- EP-A1- 1 086 836
- EP-B1- 1 176 086
- WO-A1-2008/074480
- DE-A1-102012 005 502
- DE-U1- 7 618 179
- DE-U1- 7 829 589
- DE-U1-202009 001 029
- JP-A- 2000 103 358
- US-A- 4 415 179
- US-A- 6 073 947
- US-A1- 2005 156 398
- US-A1- 2006 181 043
- US-A1- 2006 244 234
- US-A1- 2007 182 119
- US-B1- 6 311 993

## Beschreibung

Die vorliegende Erfindung betrifft ein Rahmensystem zum Einsatz in Kraftfahrzeugen, insbesondere in Nutzfahrzeugen. Rahmeneinheiten an sich sind aus dem Stand der Technik bereits bekannt. Insbesondere werden als Rahmeneinheit im Stand der Technik Lagerböcke verwendet, welche eine Verbindung zwischen dem Längslenker eines Fahrzeugfahrwerkes und dem Rahmen des Fahrzeuges herstellen. Dabei werden die Lagerböcke zumeist an den Rahmen des Fahrzeuges angeschweißt oder an diesem mittels Schraub- oder Bolzverbindung festgelegt. In den meisten Fällen ist dabei eine Stabilisierung des Lagerbockes durch zusätzliche Abstützelemente erforderlich, welche zusätzlich am Lagerbock festgelegt werden müssen. Es hat sich dabei gezeigt, dass die aus dem Stand der Technik bekannten Lagerböcke überdimensioniert sind und insbesondere nicht an lokale Spannungsspitzen angepasst werden können. Darüber hinaus ist bei den aus dem Stand der Technik bekannten Lagerböcken ein hoher Montageaufwand nötig, um zum einen den Lagerbock selbst als auch die entsprechend erforderlichen Abstützelemente an dem Lagerbock und am Rahmen des Fahrzeuges anzubringen.

Aufgabe der vorliegenden Erfindung ist es ein Rahmensystem bereitzustellen, welches insbesondere die aus dem Stand der Technik bekannten Nachteile vermeidet oder reduziert.

Die US 2006/0181043 A1, die US 6,073,947 A, die US 2005/0156398 A1 und die US 2006/0244234 A1 offenbaren jeweils Lagerböcke zur Anbindung von Lenkern am Rahmen eines Kraftfahrzeuges, wobei die Lagerböcke aus umgeformtem Blech hergestellt sind und einen Außenteil, einen Innenteil und einen Querbereich aufweisen.

Die WO 2008/074480 A1, die US 6,311,993 B1, die EP 0 773 119 A1, die US 4,415,179 und die JP 2000103358 A offenbaren jeweils mehrteilig aufgebaute und mittels Schweißen hergestellte Rahmenbefestigungssysteme zur Festlegung von Fahrwerksteilen am Rahmen eines Fahrzeuges.

Weitere Rahmeneinheiten bzw. Rahmensysteme sind aus der US 2006/244234 A1, der EP 1 086 836 A1, der EP 1 176 086 B1, der US 2007/182119 A1, der DE 20 2009 001029 U1, der DE 78 29 589 U1, der DE 76 18 179 U1 und der DE 10 2012 005502 A1 bekannt, wobei das Dokument DE 76 18 179 U1 den Oberbegriff des Anspruchs 1 offenbart.

Diese Aufgabe wird gelöst mit einem Rahmensystem gemäß Anspruch 1.

Für den Fall, dass sich die Beschreibung im Folgenden auf eine Rahmeneinheit bzw. auf deren Merkmale bezieht, sei hervorgehoben, dass die Ausgestaltung einer solchen Rahmeneinheit erfindungsgemäß für die jeweilige Rahmeneinheit des erfindungsgemäßen Rahmensystems gilt.

Erfindungsgemäß umfasst die Rahmeneinheit ein Außenteil und ein Innenteil und einen Querbereich, wobei der Querbereich und das Außenteil sich im Wesentlichen quer zueinander erstrecken und/oder der Querbereich und das Innenteil sich im Wesentlichen quer zueinander erstrecken, wobei der Querbereich einstückig mit dem Außenteil oder mit dem Innenteil ausgebildet ist, wobei das Außenteil und/oder das Innenteil einen Befestigungsbereich zur Festlegung an einem Fahrzeugrahmen aufweist, wobei das Außenteil einen äußeren Lagerbereich und das Innenteil einen inneren Lagerbereich aufweist, wobei zwischen dem äußeren und dem inneren Lagerbereich ein Achslenker anordenbar und schwenkbar um eine Lagerachse an den Lagerbereichen festlegbar ist, wobei der Querbereich ausgelegt ist, Momente vom Außenteil und/oder dem Innenteil um eine Orthogonale zur Lagerachse aufzunehmen. Mit anderen Worten ist der Querbereich dafür ausgelegt das Außenteil und/oder das Innenteil gegen Verschwenkung um eine Orthogonale zur Lagerachse zusätzlich zur Befestigung dieser Teile am Rahmen des Nutzfahrzeuges zu sichern. Die Rahmeneinheit ist mit anderen Worten bevorzugt ein Lagerbock, bei welchem zusätzlich ein Querbereich an einem der Teile der Rahmeneinheit, Außenteil oder Innenteil, einstückig ausgebildet ist. Besonders bevorzugt ist die Rahmeneinheit somit mit anderen Worten zweiteilig ausgebildet. Die zweiteilige Ausbildung der Rahmeneinheit reduziert insbesondere den Montageaufwand, da weniger Bauteile miteinander in Verbindung gebracht werden müssen und durch einen Monteur zur selben Zeit hantiert werden müssen. Darüber hinaus ist durch die einstückige Ausbildung des Querbereiches mit jeweils einem der Teile Außenteil oder Innenteil eine besonders hohe Festigkeit der Verbindung zwischen dem Querbereich und dem jeweiligen Teil der Rahmeneinheit gewährleistet, welche auch bei geringen Materialstärken des Außenteils, des Innenteils und/oder des Querbereiches eine ausreichende Festigkeit bereitstellt. Darüber hinaus weist zumindest eines der Teile Außenteil oder Innenteil einen Befestigungsbereich zur Festlegung an einem Fahrzeugrahmen auf. Der Befestigungsbereich ist dabei vorzugsweise als Vorsprung oder Flanschabschnitt ausgebildet, welcher derart mit dem korrespondierenden Bereich eines Fahrzeugrahmens in Eingriff bringbar ist, dass eine stoffschlüssige Verbindung oder die Herstellung einer kraft- und/oder formschlüssigen Verbindung (beispielsweise Schraub- oder Nietverbindung) besonders begünstigt wird. Insbesondere bevorzugt ist der Befestigungsbereich dabei ein flanschartiger, blechartig ausgeformter Bereich am Außenteil und/oder am Innenteil. In einer weiteren bevorzugten Ausführungsform kann das Außenteil und/oder das Innenteil jeweils eine Vielzahl von Befestigungsbereichen aufweisen. Auf diese Weise ist es möglich, bereits über die einzelnen Befestigungsbereiche eine Verbindung zwischen dem Fahrzeugrahmen und dem Außenteil und/oder dem Innenteil herstellen zu können, welche bereits Biegemomente zwischen dem Fahrzeugrahmen und der Rahmeneinheit aufnehmen und übertragen kann. Das Außenteil weist einen äußeren Lagerbereich und das Innenteil einen inneren Lagerbereich auf, wobei die Lagerbereiche jeweils vorzugsweise als Aussparung, besonders bevorzugt langlochförmig, ausgebildet sind. Mit dem Lagerbereich ist vorzugsweise ein Achslenker, welcher an sich aus dem Stand der Technik bekannt ist, derart in Eingriff bringbar, dass er um eine Lagerachse schwenkbar und gegen Verlagerung quer zur Lagerachse gesichert an den Lagerbereichen festgelegt ist. Besonders bevorzugt werden zur Festlegung des Achslenkers Bolzenelemente oder ähnliche Kraftübertragungselemente verwendet, welche in den Lagerbereichen formschlüssig eingreifen und in dem zwischen den Lagerbereichen liegenden Abschnitt mit dem Achslenker in formschlüssigen Eingriff gelangen. Die Lagerachse, um welche der Achslenker an der Rahmeneinheit schwenkbar anordenbar ist, dient dabei als Referenzgeometrie für weitere Merkmale der Rahmeneinheit. Der Querbereich dient in erster Linie als Abstützung des Außenteils und/oder des Innenteils gegen Verschwenkung um eine Orthogonale zur Lagerachse. Mit anderen Worten verhindert der Querbereich, dass das Außenteil und/oder das Innenteil sich bezogen auf den Fahrzeugrahmen senkrecht zur Lagerachse verschwenken können, wobei der Querbereich entsprechende Momente um eine Orthogonale zur Lagerachse aufnimmt und das Außenteil und das Innenteil zusätzlich zu deren Befestigung am Fahrzeugrahmen gegen Verschwenkung sichert. Bevorzugt erstreckt sich der Querbereich bezogen auf das Kraftfahrzeug, vorzugsweise das Nutzfahrzeug, entlang dessen Querrichtung. Um die Abstützung des Außenteils und/oder des Innenteils zu erreichen, ist der Querbereich dabei vorzugsweise am Fahrzeugrahmen selbst oder alternativ bevorzugt über weitere dazwischenliegende Elemente am Fahrzeugrahmen abgestützt. Als weitere dazwischen liegende Elemente können am Fahrzeugrahmen selbst vorgesehene Abstützelemente oder alternativ eine zweite Rahmeneinheit, wie sie im Folgenden noch beschrieben wird, vorgesehen sein. Der Vorteil der erfindungsgemäßen Rahmeneinheit ist, dass die Abstützung der Rahmeneinheit gegen Verschwenkung um eine Orthogonale zur Lagerachse durch ein integral mit einem der beiden Bauteile der Rahmeneinheit, Außenteil oder Innenteil, ausgebildeten Querbereich gewährleistet ist.

Bevorzugt weist der Querbereich dabei eine Erstreckung längs oder parallel zur Lagerachse auf, die ein zumindest 1,5-faches, vorzugsweise ein 2-4-faches des Abstandes des inneren Lagerbereiches vom äußeren Lagerbereich ist. Mit dieser bevorzugten Erstreckung des Querbereiches kann dieser Ruhemomente übertragen. Dabei werden die verbiegenden Momente auf die Rahmeneinheit besonders durch den Längslenker des Nutzfahrzeuges in die Rahmeneinheit eingeleitet, wobei als Momentübertragungsbereich die Lagerbereiche in Frage kommen. Besonders bevorzugt weist der Querbereich eine Erstreckung auf, die zumindest ein 1,5-faches des Abstandes der beiden Lagerbereiche voneinander ist. Auf diese Weise ist der Hebelarm, mit welchem der Querbereich Momente aufnehmen kann, größer als der Hebelarm, mit welchem der Achslenker ein Moment um eine Orthogonale zur Lagerachse an die Rahmeneinheit überträgt. Hierdurch lässt sich eine sichere Abstützung der Rahmeneinheit durch den Querbereich erreichen. Besonders bevorzugt weist der Querbereich eine größere Erstreckung auf, was eine Übertragung und Absicherung höherer Momente erlaubt, nachteilig jedoch ein höheres Gewicht der Rahmeneinheit zur Folge hat.

Mit Vorteil erstreckt sich der Querbereich im Wesentlichen längs einer Parallelen zur Lagerachse. Als Erstreckung im Wesentlichen längs der Parallelen zur Lagerachse wird im vorliegenden Zusammenhang im Wesentlichen eine Erstreckung verstanden, die deutlich größer ist als die Erstreckung des Querbereiches in anderen Raumrichtungen. Besonders bevorzugt ist dabei die Erstreckung des Querbereiches in einer beliebigen orthogonal zur Lagerachse verlaufenden Richtung kleiner als 0,8 der größten Erstreckung, welche parallel oder längs der Lagerachse verläuft bzw. gemessen wird. Auf diese Weise kann am Querbereich Material eingespart werden, da mit der Erstreckung des Querbereiches parallel zur Lagerachse ein Hebelarm erzeugt werden kann, welcher auch durch einen ansonsten relativ dünnwandig oder schlank ausgebildeten Querbereich eine hohe Momentübertragung erlaubt. Hierdurch wird insbesondere das Gewicht der Rahmeneinheit reduziert.

Mit Vorteil weist der Querbereich an seinem vom Außenteil abgewandten Ende eine geringere Erstreckung orthogonal zur Lagerachse auf als das Außenteil und/oder das Innenteil in derselben Richtung orthogonal zur Lagerachse. Mit anderen Worten ist der Querbereich an seinem vom Außenteil abgewandten Ende, welches somit vorzugsweise in Richtung der Fahrzeugmitte weist oder in der Fahrzeugmitte liegt, im Vergleich zum Außenteil und/oder zum Innenteil schlank ausgebildet. Auf diese Weise kann Material am Querbereich eingespart werden und somit das Gewicht der Rahmeneinheit reduziert werden. Mit Vorteil ist dabei der Querbereich im am Fahrzeug festgelegten Zustand der Rahmeneinheit sowohl in der vertikalen Richtung, welche orthogonal zur Lagerachse liegt, als auch in der horizontalen Richtung, der Fahrzeuglängsrichtung, welche orthogonal zur Lagerachse liegt, schlanker ausgebildet als das Außenteil und/oder das Innenteil in den jeweils selben Richtungen. Besonders bevorzugt ist der Querbereich dabei in einer längs der Lagerachse verlaufenden Richtung beabstandet vom Befestigungsbereich des Außenteils und/oder des Innenteils.

Mit Vorteil ist der Übergangsbereich von der größten Erstreckung des Querbereiches zur geringsten Erstreckung des Querbereiches orthogonal zur Lagerachse einfach oder vielfach gekrümmt ausgebildet. Mit anderen Worten ist der Querbereich dort, wo sich seine Erstreckung ausgehend von seiner größten Erstreckung im Bereich des Außenteils oder des Innenteils bis hin zu seiner geringsten Erstreckung im Bereich seines vom Außenteil abgewandten distalen Endes, verringert gekrümmt ausgebildet. Dabei ist vorzugsweise eine S-förmige Krümmung mit zwei gekrümmten Bereichen und einem dazwischen liegenden Wendepunkt oder einer dazwischenliegenden Geraden vorgesehen. Auf diese Weise kann Kerbwirkung bei Biegemomenten- und Kraftübertragung an dem Querbereich vermieden werden.

Weiterhin bevorzugt ist/sind das Außenteil und/oder das Innenteil und/oder der Querbereich blechartig ausgebildet. In einer besonders bevorzugten Ausführungsform sind sämtliche Bauteile der Rahmeneinheit, also das Außenteil, das Innenteil und der Querbereich jeweils blechartig ausgebildet. Als blechartige Ausbildung ist im vorliegenden Fall eine flache flächige Ausbildung des jeweiligen Teils der Rahmeneinheit gemeint. Dabei ist mit Vorteil eine der Erstreckungsrichtungen wesentlich geringer als die jeweils anderen Erstreckungsrichtungen des jeweiligen Bauteils. Mit anderen Worten ist/sind das Außenteil, das Innenteil, und/oder der Querbereich jeweils flach ausgebildet. Besonders bevorzugt sind die Bauteile der Rahmeneinheit als sogenannte *tailored blanks* ausgebildet. *Tailored blanks* zeichnen sich dadurch aus, dass an einem blechartigen Bauteil verschiedene Wandstärken in verschiedenen Bereichen herstellbar sind und insbesondere bevorzugt Fügebereiche zwischen einzelnen Blechteilen vorgesehen sind, welche zur Herstellung einer besonders festen form- oder stoffschlüssigen Verbindung zwischen einzelnen *tailored blanks* ausgelegt sind. Weiterhin ist es möglich mithilfe von *tailored blanks* verschiedene Materialien an ein und demselben blechartigen Bauteil zu verwenden, wie im Folgenden noch erläutert wird.

Besonders bevorzugt weist das Außenteil und/oder das Innenteil und/oder der Querbereich verstärkte Bereiche mit höherer Wandstärke und geschwächte Bereiche mit geringerer Wandstärke auf. Insbesondere für den Fall, dass die Teile der Rahmeneinheit als *tailored blanks* ausgelegt sind, ist es möglich, dass Bereiche mit höherer Wandstärke und Bereiche mit geringerer Wandstärke an ein und demselben blechförmig ausgebildeten Bauteil hergestellt sind. Auf diese Weise lassen sich das Außenteil und/oder das Innenteil und/oder der Querbereich für bestimmte Belastungen in bestimmten Bereichen verstärken und an anderen Bereichen, welche geringeren Kräften und Momenten ausgesetzt sind, schwächen, um in diesen Bereichen Gewicht einzusparen. Insbesondere kann es dabei bevorzugt sein, dass in den Bereichen des Außenteils, des Innenteils und des Querbereiches, in welchen stoffschlüssige oder formschlüssige Verbindungen mit anderen Bauteilen wie beispielsweise dem Fahrzeugrahmen oder dem Längslenker oder einem Schwingungsdämpfer hergestellt werden, verstärkte Bereiche vorgesehen sind, während in den benachbarten Bereichen jeweils eine geringere Wandstärke und somit ein geringeres Gewicht vorgesehen ist.

Mit Vorteil ist am Außenteil und/oder am Innenteil eine Dämpferbefestigung vorgesehen, wobei die Dämpferbefestigung zum mittelbaren oder unmittelbaren Eingriff mit einem Schwingungsdämpfer oder Stabilisator ausgebildet ist. Mit Vorteil ist integral am Außenteil und/oder am Innenteil jeweils eine Dämpferbefestigung vorgesehen. Die Dämpferbefestigung ist dabei vorzugsweise eine Aussparung, in welcher ein Schwingungsdämpfer mittelbar über eine Schraube oder unmittelbar über an dem Schwingungsdämpfer selbst vorgesehene bolzenförmige Vorsprünge mit der Rahmeneinheit in Eingriff bringbar ist. Besonders bevorzugt ist der Bereich der Dämpferbefestigung dabei einstückig mit dem Außenteil oder dem Innenteil ausgebildet, so dass eine Materialbeeinträchtigung durch Anschweißen eines Bereiches zur Festlegung eines Schwingungsdämpfers im Rahmen der vorliegenden Erfindung vermieden werden kann.

Mit Vorteil weist, vorzugsweise im Bereich einer Dämpferbefestigung, das Außenteil oder das Innenteil einen Stabilisierungsbereich auf, welcher den Abstand zwischen dem Außenteil und dem Innenteil überbrückt und zur stoff- oder formschlüssigen Festlegung am jeweils gegenüberliegenden Teil, Außenteil oder Innenteil, ausgelegt ist. Der Stabilisierungsbereich ist dabei insbesondere bevorzugt ein blechförmiger Vorsprung, welcher besonders bevorzugt den Abstand zwischen dem Außenteil und dem Innenteil überbrückt und sich mit anderen Worten somit längs oder parallel zur Lagerachse erstreckt. Der Stabilisierungsbereich dient dabei der Unterstützung der Dämpferbefestigung. Weiterhin bevorzugt kann der Stabilisierungsbereich zur Festlegung am Fahrzeugrahmen ausgelegt sein, so dass neben der Festlegung im Befestigungsbereich das Außenteil und das Innenteil jeweils über den Stabilisierungsbereich am Rahmen des Nutzfahrzeuges festlegbar sind. Weiterhin erhöht der Stabilisierungsbereich die Verwindungssteifigkeit der Rahmeneinheit und ermöglicht unter anderem auch eine Vormontage des Innenteils und des Außenteils, bevor die Rahmeneinheit insgesamt an den Fahrzeugrahmen eines Nutzfahrzeuges installiert wird.

Ferner bevorzugt weist das Außenteil und/oder das Innenteil und/oder der Querbereich einen Verstärkungsbereich auf, wobei der Verstärkungsbereich als ein Abschnitt mit dem Außenteil und/oder dem Innenteil und/oder den Querbereich ausgebildet ist. Es versteht sich in diesem Zusammenhang, dass der Verstärkungsbereich nur einstückig mit den Bauteilen verbunden ist, an denen er vorgesehen ist. Als Verstärkungsbereich kommt insbesondere ein abgekanteter Bereich des blechförmig ausgebildeten Außenteils und/oder des blechförmig ausgebildeten Innenteils und/oder des blechförmig ausgebildeten Querbereiches in Frage. Weiterhin bevorzugt ist der Verstärkungsbereich als lokale Material- bzw. Wandstärkenverdickung an den jeweiligen Bauteilen ausgeführt. Mit Vorteil kann durch die blechförmige Ausbildung der einzelnen Komponenten der Rahmeneinheit lokal eine sich quer zur Haupterstreckung des blechförmigen Materials erstreckende Verstärkung vorgesehen sein, welche insbesondere die Verwindungssteifigkeit der blechförmig ausgebildeten Teile der Rahmeneinheit erhöht.

Mit Vorteil ist ein erster Verstärkungsbereich als abgewinkelter Blechabschnitt im Randbereich des jeweiligen Bauteils, Außenteil und/oder Innenteil und/oder Querbereich, ausgebildet. Abgewinkelte Blechabschnitte im Randbereich des jeweiligen Bauteils sind besonders einfach herzustellen, da beispielsweise in einem Gesenkschmiedevorgang eine Vielzahl von Bereichen der Bauteile in einem einzigen Verfahrensschritt abgekantet werden können. Die Herstellungskosten für Rahmeneinheiten können auf diese Weise gesenkt werden. Dabei findet bei der Vornahme dieses Umformvorganges eine zusätzliche Gefügeveränderung statt, die vorteilhafte Materialeigenschaften der jeweiligen Bauteile der Rahmeneinheit erzeugt. Es kann somit durch die Herstellung eines ersten Verstärkungsbereiches der als abgewinkelter Blechabschnitt ausgebildet ist, nicht nur die Verwindungssteifigkeit des Bauteils erhöht werden, sondern es kann auch insgesamt die Festigkeit im Kantenbereich zwischen dem Bauteil und dessen Verstärkungsbereich erhöht werden.

Mit Vorteil ist ein zweiter Verstärkungsbereich als Materialverdickung des jeweiligen Bauteils, Außenteil und/oder Innenteil und/oder Querbereich ausgebildet. Der zweite Verstärkungsbereich ist somit, wie bereits zuvor beschrieben, als Abschnitt mit lokal erhöhter Wandstärke ausgebildet und weist die entsprechenden Vorteile auf.

Mit Vorteil ist ein zweiter Verstärkungsbereich an zumindest dem äußeren Lagerbereich vorgesehen, wobei die längs der Lagerachse gemessene Wandstärke des zweiten Verstärkungsbereichs größer ist als die Wandstärke des Außenteils außerhalb des äußeren Lagerbereiches. Als Wandstärke des Außenteils außerhalb des Lagerbereiches wird dabei insbesondere die mittlere Wandstärke des Außenteils außerhalb des Lagerbereiches definiert. Indem am Außenteil ein zweiter Verstärkungsbereich vorgesehen ist, kann über den äußeren Lagerbereich eine größere Kraft übertragen werden. Dabei ist der zweite Verstärkungsbereich zumindest am äußeren Lagerbereich vorgesehen. Im Rahmen der vorliegenden Erfindung ist das Außenteil vorzugsweise das mit höheren Kräften beaufschlagte Teil. Bevorzugt, insbesondere wenn auch das Innenteil ähnlich große Kräfte wie das Außenteil übertragen muss, ist ein zweiter Verstärkungsbereich auch am inneren Lagerbereich vorgesehen, wobei dieser in diesem Fall eine größere Wandstärke aufweist als die mittlere Wandstärke des Innenteils außerhalb des inneren Lagerbereiches. Auf diese Weise lassen sich das Außenteil und das Innenteil bevorzugt an die aufzunehmenden Kräfte anpassen und eine optimierte Spannungsverteilung innerhalb des Materials, vorzugsweise des blechförmigen Materials, der Bauteile der Rahmeneinheit ist möglich.

Mit Vorteil ist oder sind das Außenteil und/oder das Innenteil und/oder der Querbereich jeweils aus zumindest zwei verschiedenen Herstellungsmaterialien ausgebildet. Alternativ oder zusätzlich bevorzugt ist eines oder sind zwei der Bauteile Außenteil, Innenteil oder Querbereich aus einem anderen Material hergestellt als die jeweils anderen Bauteile Außenteil, Innenteil oder Querbereich. Es kann mit Vorteil auf diese Weise eine noch bessere Anpassung der Rahmeneinheit an bestimmte Spannungszustände und Belastungen erreicht werden. Besonders bevorzugt ist dabei der Lagerbereich aus einem anderen, festeren Material, bspw. hochfester, verschleißmindernder Stahl, als die restlichen Bereiche des Außenteils und/oder des Innenteils. Weiterhin bevorzugt ist das Außenteil mit Vorteil aus festerem Material hergestellt als das Innenteil, welches mit Vorteil aus kostengünstigerem Metall hergestellt sein kann. Zur ganzheitlichen oder lokalen Verstärkung an einem der Bauteile kann mit Vorteil ein Kompositwerkstoff, oder Verbundwerkstoff, zum Einsatz gelangen. So wurde insbesondere das *Tapelegen* mit unidirektionalen Fasern als vorteilhafte Verstärkung im Rahmen der vorliegenden Erfindung befunden.

Mit Vorteil weist der Querbereich an seinem, vom Außenteil abgewandten Ende, einen Eingriffsbereich zur unmittelbaren Festlegung an dem Fahrzeugrahmen auf. Insbesondere bevorzugt kann der Querbereich an seinem am Fahrzeug nach innen bzw. zur Fahrzeugmitte weisenden distalen Ende mit dem Fahrzeugrahmen in Verbindung gebracht werden. Auf diese Weise kann der Verbund aus Innenteil und Querbereich oder Außenteil und Querbereich jeweils gegen Verschwenkung um die Fahrzeuglängsachse gesichert werden.

Erfindungsgemäß ist ein Rahmensystem vorgesehen, welches zwei Rahmeneinheiten mit den zuvor beschriebenen Merkmalen aufweist, wobei die erste Rahmeneinheit ein erstes Außenteil, ein erstes Innenteil und einen ersten Querbereich aufweist, wobei die zweite Rahmeneinheit ein zweites Außenteil, ein zweites Innenteil und einen zweiten Querbereich aufweist, wobei das erste Innenteil und das zweite Innenteil zwischen dem ersten Außenteil und dem zweiten Außenteil angeordnet sind, wobei der erste Querbereich und der zweiter Querbereich mittelbar oder unmittelbar aneinander festlegbar oder festgelegt sind oder einstückig miteinander ausgebildet sind. Bevorzugt sind an einem Rahmensystem zwei Rahmeneinheiten mit den zuvor beschriebenen Merkmalen angeordnet und am Fahrzeugrahmen festgelegt oder festlegbar. Dabei weisen beide Rahmeneinheiten jeweils einen Querbereich auf, wobei die Querbereiche insbesondere dafür ausgelegt sind, aneinander mittelbar oder unmittelbar festgelegt zu werden. In einer weiterhin bevorzugten Ausführungsform sind die Querbereiche einstückig miteinander ausgebildet, wobei durch die einstückige Ausbildung des jeweiligen Querbereiches mit entweder dem Innenteil oder dem Außenteil der jeweiligen Rahmeneinheit auch diese entsprechenden Bauteile einstückig über die beiden einstückigen Querbereiche miteinander ausgebildet sind. Der Vorteil des Merkmals, dass die Querbereiche aneinander festgelegt werden oder einstückig miteinander ausgebildet sind, ist, dass im Bereich der Fahrzeugmitte keine Festlegung der Querbereiche am Fahrzeugrahmen stattfinden muss, sondern die Querbereiche sich aneinander abstützen können und somit auf einfache und vom Fahrzeugrahmen unabhängige Weise eine Verschwenkbewegung der beiden Rahmeneinheiten um die Fahrzeuglängsachse, bzw. um eine Orthogonale zur Lagerachse, verhindern können.

Erfindungsgemäß bilden der erste und der zweite Querbereich einen Überlappungsbereich, wobei im Überlappungsbereich eine Verbindung zwischen dem ersten und dem zweiten Querbereich herstellbar ist, welche Biegemomente um eine Orthogonale zur Lagerachse überträgt. Durch die Überlappung des ersten und des zweiten Querbereiches im Überlappungsbereich können nicht nur Biegemomente in diesem Bereich besser übertragen werden. Darüber hinaus ist es bevorzugt auch möglich, eine Anpassung des Rahmensystems an verschieden breite Fahrzeugrahmen zu erreichen, indem die Querbereiche mehr oder weniger stark überlappend ineinandergeschoben werden. Erfindungsgemäß weist der Überlappungsbereich eine Erstreckung parallel zur Lagerachse auf, die ein 0,02-bis 0,09-faches oder ein 0,1 bis 0,2-faches oder ein 0,21 bis 0,3-faches des maximalen Abstandes der beiden Außenteile voneinander ist. Bei einer Überlappung von nur einem 0,02- bis 0,09-fachen des gesamten maximalen Abstandes der beiden Außenteile voneinander ist somit der Hebelarm im Überlappungsbereich relativ klein, wobei nur vergleichsweise geringe Momente im Überlappungsbereich aufgenommen werden können. Gleichzeitig aber ist auch das Gewicht des Rahmensystems erheblich reduziert, da durch die nur relativ geringe Überlappung der Querbereiche wenig überschüssiges Material vorgesehen ist. In dem bevorzugten Bereich des 0,1- bis 0,2-fachen des maximalen Abstandes der beiden Außenteile voneinander ist die Überlappung groß genug, um auch größere Momente aufzunehmen, wobei jedoch auch das Gewicht im noch relativ geringen Rahmen gehalten werden kann. Dieser bevorzugte Bereich bietet sich dabei insbesondere für Standardnutzfahrzeuge, welche insbesondere zum Einsatz auf Straßen ausgelegt sind, an. Der weiterhin bevorzugte Bereich von 0,21 bis 0,3 des maximalen Abstandes der beiden Außenteile voneinander ist dabei in der Lage, die höchstmöglichen Biegemomente zu übertragen, wobei jedoch im Vergleich zu den kleineren bevorzugten Überlappungslängen ein relativ hohes Gewicht des Rahmensystems in Kauf genommen werden muss. Der bevorzugte Überlappungsbereich von 0,21 bis 0,3 bietet sich dabei insbesondere für Nutzfahrzeuge an, welche in unwegsamem Gelände in Einsatz kommen und bei denen relativ hohe Kräfte über die Längslenker auf die Rahmeneinheiten übertragen werden, welche durch den Überlappungsbereich zwischen dem ersten und dem zweiten Querbereich aufgenommen werden müssen.

Alternativ bevorzugt weist der Überlappungsbereich eine Erstreckung parallel zur Lagerachse auf, die ein 0,05- bis 0,18-faches und bevorzugt ein 0,1 bis 0,15-faches des maximalen Abstandes des ersten Außenteils vom zweiten Außenteil ist. In dem bevorzugten Bereich des 0,05- bis 0,18-fachen des maximalen Abstandes der beiden Außenteile voneinander, ist nach Versuchen der Anmelderin bei der Auslegung des Rahmensystems für den überwiegenden Teil der bekannten Nutzfahrzeuge ein guter Kompromiss aus übertragbaren Biegemomenten und einem gering gehaltenen Gewicht möglich. Im engeren, besonders bevorzugten Bereich, von 0,1 bis 0,15 ist für die ist für Nutzfahrzeuge, welche lediglich auf befestigten Straßen fahren jeweils der beste Kompromiss aus ausreichender Festigkeit und geringem Gewicht erreichbar.

Mit Vorteil ist das erste Außenteil einstückig mit dem ersten Querbereich und dem zweiten Querbereich und dem zweiten Außenteil ausgebildet. Bei dieser besonders bevorzugten Ausführungsform sind die beiden Außenteile jeweils einstückig mit den Querbereichen ausgebildet, wobei auch die Querbereiche jeweils einstückig miteinander ausgebildet sind. Es ergibt sich hierdurch ein einziges Bauteil, welches verschiedene Funktionen vereint. Weiterhin bevorzugt ist durch die einstückige Ausbildung des ersten Querbereiches mit dem zweiten Querbereich eine Übertragung hoher Kräfte und Momente, welche in die beiden Außenteile eingeleitet werden, möglich, wobei die Wandstärke sich insbesondere im Vergleich zu einer Überlappung des ersten Querbereiches mit dem zweiten Querbereich deutlich reduzieren lässt.

Alternativ bevorzugt sind der erste Querbereich und der zweite Querbereich mittelbar oder unmittelbar stoffschlüssig aneinander festgelegt. Hierfür kann insbesondere eine direkt zwischen dem ersten Querbereich und dem zweiten Querbereich hergestellte Schweißnaht vorgesehen sein. Als mittelbare Festlegung wird insbesondere das Verschweißen des ersten und des zweiten Querbereiches mit einem zusätzlich vorgesehenen Bauteil angesehen, welches insbesondere eine Einstellbarkeit der Erstreckung des Rahmensystems parallel oder längs zur Lagerachse erlaubt. Weiterhin bevorzugt kann durch die Aufteilung des ersten Querbereiches und des zweiten Querbereiches und einem zusätzlich vorgesehenen Bauteil die Bauteilgröße der einzelnen Bauteile verringern und somit eine leichtere Handhabung für einen Monteur erreichen. Bevorzugt sind der erste Querbereich und der zweite Querbereich mittelbar und/oder unmittelbar formschlüssig aneinander festgelegt. Insbesondere bevorzugt kann an den Querbereichen jeweils eine Kombination eines Rücksprunges mit einem Vorsprung oder einer Aussparung mit einer entsprechenden Eingriffsgeometrie am jeweils gegenüberliegenden Querbereich vorgesehen sein, mittels derer diese ineinander gehakt werden können und anschließend zusätzlich über weitere formschlüssig mit den Querbereichen in Verbindung stehende Elemente gesichert werden. Der Vorteil einer formschlüssigen Verbindung des ersten Querbereiches und des zweiten Querbereiches miteinander ist, dass diese Verbindung lösbar ist und somit eine einfache Demontage des Rahmensystems ermöglicht wird.

Bevorzugt ist ein Verbindungselement vorgesehen, welches mit dem ersten Querbereich und mit dem zweiten Querbereich in Eingriff bringbar ist, um ein Biegemoment um eine Orthogonale zur Lagerachse vom ersten auf den zweiten Querbereich und umgekehrt zu übertragen. Das Verbindungselement ist dabei vorzugsweise ein blechförmiges Bauteil, welches mit der jeweiligen Außengeometrie des ersten Querbereiches und des zweiten Querbereiches jeweils in Eingriff bringbar ist, um den ersten und den zweiten Querbereich gegen Verschwenkung zueinander zu sichern. Vorzugsweise sind die Querbereiche dabei in das Verbindungselement einschiebbar. Hierdurch kann insbesondere ein Ausgleich von Größenunterschieden an verschiedenen Fahrzeugrahmen verschiedener Nutzfahrzeuge auf einfache Weise erreicht werden.

Mit Vorteil bildet das Verbindungselement mit dem ersten Querbereich und mit dem zweiten Querbereich jeweils über eine Überlappung längs der Lagerachse, wobei das Verbindungselement eine Erstreckung längs oder parallel zur Lagerachse aufweist, die größer ist als die Summe der Überlappung mit dem ersten und mit dem zweiten Querbereich. Mit anderen Worten weist das Verbindungselement eine größere Erstreckung längs oder parallel zur Lagerachse auf als die Länge, mit der es jeweils mit dem ersten und dem zweiten Querbereich in Eingriff steht. Auf diese Weise ist es möglich, dass ein und dasselbe Verbindungselement für verschieden breite Fahrzeugrahmen in Einsatz gelangen kann. Nachteilig bei einer derartigen Überdimensionierung des Verbindungselements ist das erhöhte Gewicht des Rahmensystems.

Mit Vorteil ist dabei die Erstreckung des Verbindungselements ein 1,1- bis 2,5-faches und vorzugsweise ein 1,3- bis 2-faches der Summe der Überlappungen mit dem ersten und dem zweiten Querbereich. Es hat sich im Rahmen der vorliegenden Erfindung gezeigt, dass ein Bereich von 1,1 bis 2,5 für das Verhältnis der Erstreckung des Verbindungselements zur Summe der Überlappungen mit dem ersten und zweiten Querbereich insgesamt einen guten Kompromiss aus einem geringen Gewicht des Rahmensystems und einer ausreichenden Einstellmöglichkeit der Gesamtbreite des Rahmensystems erlaubt. Der besonders bevorzugte Bereich von 1,3 bis 2 dieses Verhältnisses erlaubt dabei insbesondere für Nutzfahrzeuge, bei welchen ein gewisser Normungsgrad vorhanden ist, dass für den überwiegenden Teil der der Anmelderin bekannten Nutzfahrzeuge ein und dasselbe Verbindungselement verwendet werden kann, um eine Vielzahl von verschiedenen Nutzfahrzeugen mit dem jeweiligen Rahmensystem einsetzen zu können.

Mit Vorteil weist das erste Innenteil einen ersten Flanschabschnitt und das zweite Innenteil einen zweiten Flanschabschnitt auf, wobei die Innenteile jeweils über einen Flanschabschnitt an einem jeweiligen Außenteil festlegbar sind. Mit Vorteil ist das Innenteil im Bereich des Flanschabschnittes mit dem jeweiligen Außenteil über eine Schweißverbindung verbunden. Schweißverbindungen haben den Vorteil, dass sie eine hohe Festigkeit bei einer geringen zusätzlichen Gewichtszunahme erreichen. Für den Fall, dass eine Demontierbarkeit des Rahmensystems bevorzugt ist, kann das Innenteil im Bereich des Flanschabschnittes auch über formschlüssige lösbare Verbindungen wie beispielsweise eine Schraubverbindung mit dem jeweiligen Außenteil in Verbindung gebracht werden.

Weitere Vorteile und Merkmale der vorliegenden Erfindung ergeben sich aus der nachfolgenden Beschreibung mit Bezug auf die beigefügten Figuren. Es versteht sich dabei, dass einzelne nur in einer der Figuren gezeigte Merkmale auch in Ausführungsformen, welche in jeweils anderen Figuren dargestellt sind, Anwendung finden können, sofern dies nicht explizit ausgeschlossen wurde oder sich aufgrund technischer Gegebenheiten verbietet.

Es zeigen:
- Fig. 1: eine perspektivische Ansicht eines Rahmensystems,
- Fig.2: eine Ansicht des Rahmensystems von Fig. 1 entlang der Fahrzeuglängsrichtung,
- Fig.3: eine Ansicht einer Rahmeneinheit entlang der Lagerachse,
- Fig.4: eine teilweise geschnittene Detailansicht einer bevorzugten Ausführungsform des Verbindungsbereiches zwischen dem ersten und dem zweiten Querbereich.

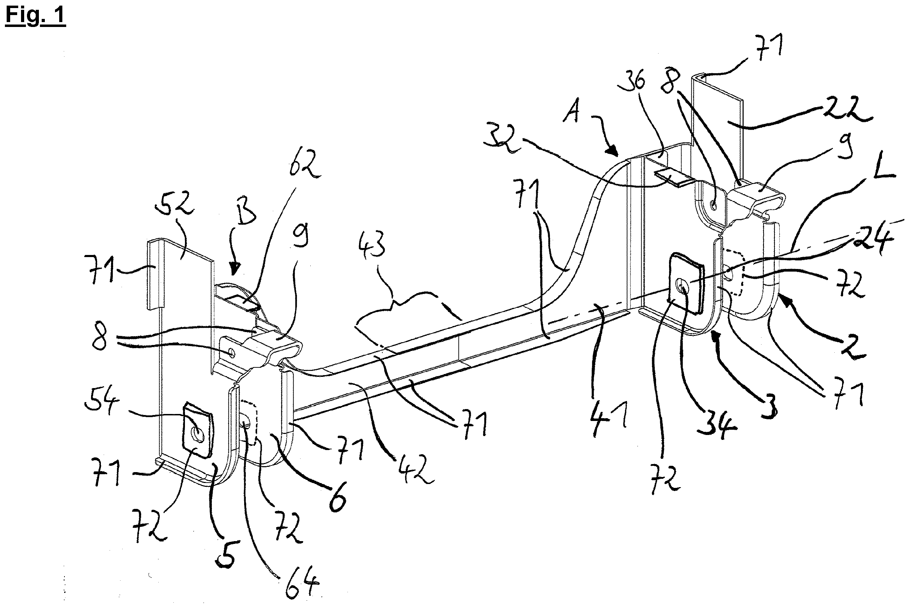

Das in Fig. 1 dargestellte Rahmensystem weist eine erste Rahmeneinheit A und eine zweite Rahmeneinheit B auf, wobei die erste Rahmeneinheit A ein erstes Außenteil 2, ein erstes Innenteil 3 und einen ersten Querbereich 41 aufweist. Die zweite Rahmeneinheit B weist entsprechend ein zweites Außenteil 5, ein zweites Innenteil 6 und einen zweiten Querbereich 42 auf. Vorzugsweise sind sämtliche Bauteile des Rahmensystems blechförmig ausgebildet, das heißt sie weisen in zumindest einer Raumrichtung eine wesentlich geringere Erstreckung auf als in den anderen Raumrichtungen. Das erste Außenteil 2 weist einen äußeren Lagerbereich 24 auf und das erste Innenteil weist einen inneren Lagerbereich 34 auf. Zwischen den Lagerbereichen 24, 34 ist ein Längslenker des Nutzfahrzeugfahrwerkes schwenkbar festlegbar. Dabei ist der Längslenker um eine Lagerachse L schwenkbar an der ersten Rahmeneinheit A festlegbar. Analog hierzu weist das zweite Außenteil 5 einen äußeren Lagerbereich 54 und das zweite Innenteil 6 einen inneren Lagerbereich 64 auf. Insbesondere bevorzugt ist es dabei, dass im zusammengebauten Zustand des Rahmensystems alle äußeren Lagerbereiche 24, 54 und inneren Lagerbereiche 34, 64 eine schwenkbare Lagerung zweier Achslenker um ein und dieselbe Lagerachse L erlauben. Mit anderen Worten sind die Lagerbereiche 24, 34, 54, 64 koaxial zueinander ausgerichtet. Vorzugsweise weist das erste Außenteil 2 einen Befestigungsbereich 22 und das zweite Außenteil 5 einen Befestigungsbereich 52 auf, wobei die Befestigungsbereiche 22, 52 jeweils als blechartiger Vorsprung ausgebildet sind, welcher insbesondere mit dem in der Figur bevorzugt oberhalb des Rahmensystems angeordneten Fahrzeugrahmen (nicht gezeigt) in Verbindung bringbar ist. Dabei können die Befestigungsbereiche 22, 52 vorzugsweise (nicht gezeigte) Bohrungen zum Einbringen von Schrauben, welche mit dem Rahmen des Nutzfahrzeuges in Eingriff gelangen, aufweisen. Alternativ bevorzugt können an den Befestigungsbereichen 22, 52 angefaste Kanten vorgesehen sein, welche insbesondere zur Herstellung einer Schweißnaht mit dem Rahmen des Nutzfahrzeuges geeignet sind oder Schweißfenster zur Herstellung von punktuellen Schweißverbindungen mit dem Fahrzeugrahmen des Nutzfahrzeuges geeignet sind. Zur Stabilisierung weisen die Befestigungsbereiche 22, 52 jeweils einen ersten Verstärkungsbereich 71 auf, welcher die Verwindungssteifigkeit der Befestigungsbereiche 22, 52 erhöht. Mit Vorteil weisen auch die Außenteile 2, 5, die Innenteile 3, 6 und die Querbereiche 41, 42 jeweils in ihren Randbereichen erste Verstärkungsbereiche 71 auf. Die ersten Verstärkungsbereiche sind dabei jeweils als abgewinkelte Blechabschnitte zur Erhöhung der Verwindungssteifigkeit an den Bauteilen des Rahmensystems vorgesehen. Hierdurch erlangen die Bauteile, wie beispielsweise der erste und der zweite Querbereich 41, 42 eine vorzugsweise C-förmige oder U-förmige oder Z-förmige Querschnittsgeometrie, welche ein besonders hohes Flächenträgheitsmoment erlaubt und bei geringem Gewicht die Übertragung von hohen Biegemomenten gestattet. Besonders bevorzugt sind im Bereich der äußeren Lagerbereiche 24, 54 und insbesondere bevorzugt auch im Bereich der inneren Lagerbereiche 34, 64 zweite Verstärkungsbereiche 72 vorgesehen, welche als lokale Materialverdickung ausgebildet sind. Hierdurch können in den Lagerbereichen höhere Kräfte von dem Rahmensystem aufgenommen werden. Weiterhin bevorzugt ist an den Außenteilen 2, 5 und den Innenteilen 3, 6 jeweils eine Dämpferbefestigung 8 vorgesehen, in welcher ein Schwingungsdämpfer an jeweils einer der Rahmeneinheiten A, B festlegbar ist. Darüber hinaus ist bevorzugt im Bereich der Dämpferbefestigung 8 ein Stabilisierungsbereich 9 vorgesehen, welcher insbesondere bevorzugt auch aus seiner in der Figur jeweils oben gezeigten Kontaktfläche für die Herstellung einer form- oder stoffschlüssigen Verbindung mit dem Fahrzeugrahmen des Nutzfahrzeuges ausgelegt ist. Mit Vorteil überlappen sich der erste Querbereich 41 und der zweite Querbereich 42 in einem Überlappungsbereich 43, wobei in diesem Überlappungsbereich 43 die von den Querbereichen 41, 42 aufgenommenen Biegemomente um eine Orthogonale zur Lagerachse L übertragen werden. Es versteht sich, dass, damit eine Überlappung in diesem Bereich möglich ist, im einer der Querbereiche 41, 42 eine etwas geringere Erstreckung quer zur Lagerachse L aufweist als jeweils andere Querbereich 41, 42. Weiterhin bevorzugt weisen die Innenteile 3, 6 jeweils einen Flanschabschnitt 36, 66 (verdeckt) zur Festlegung an dem jeweils gegenüberliegenden Außenteil 2, 5 auf. Die Flanschabschnitte 36, 66 sind dabei vorzugsweise als abgekantete blechförmige Abschnitte des Innenteils 3, 6 ausgebildet.

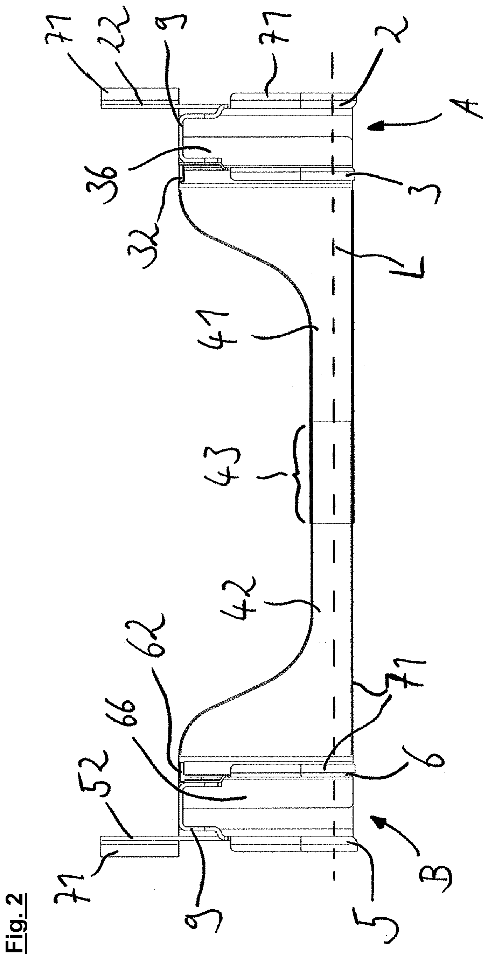

Fig. 2 zeigt eine Ansicht der in Fig. 1 gezeigten bevorzugten Ausführungsform des Rahmensystems entlang einer Orthogonalen zur Lagerachse vorzugsweise entlang der Fahrzeuglängsrichtung. Dabei sind die Rahmeneinheiten A, B jeweils an ihrer in der Figur oben gezeigten Seite mit einem Abschnitt des Rahmens des Nutzfahrzeuges in Eingriff bringbar. Die Figur 2 zeigt deutlich, dass der erste Querbereich 41 und der zweite Querbereich 42 jeweils an ihren von den Außenteilen 2, 5 abgewandten Enden eine wesentlich geringere Erstreckung senkrecht zur Lagerachse L aufweisen als in ihrem Anbindungsbereich an die Außenteile 2, 5. Darüber hinaus ist der Bereich der geringeren, in der Figur als vertikal dargestellten, Erstreckung der Querbereiche jeweils auf der von dem Fahrzeugrahmen abgewandten Seite, mit anderen Worten also unten, vorgesehen. Auf diese Weise ist eine noch bessere Abstützung der ersten Rahmeneinheit A und der zweiten Rahmeneinheit B gegen Verschwenken um eine Orthogonale zur Lagerachse L durch die Querbereiche 41, 42 möglich. Insbesondere bevorzugt bilden die Querbereiche 41, 42 in dieser Konfiguration einen im Wesentlichen rechteckigen Rahmen gemeinsam mit dem Rahmen des Nutzfahrzeuges. Weiterhin ist auch die bevorzugt gekrümmt ausgestaltete Übergangszone zwischen der größeren Erstreckung der Querbereiche 41, 42 und der geringeren Erstreckung der Querbereiche 41, 42 im Überlappungsbereich 43 gezeigt.

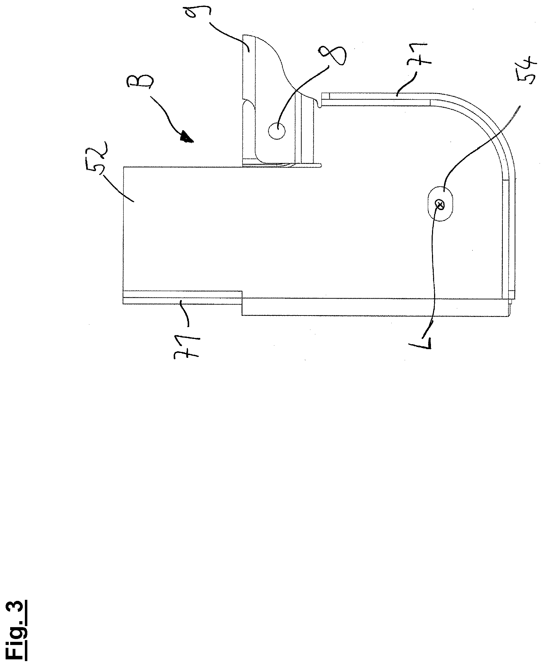

Fig. 3 zeigt eine Ansicht der zweiten Rahmeneinheit B entlang der Lagerachse L. Dabei ist insbesondere zu erkennen, dass der Stabilisierungsbereich 9 im zusammengebauten Zustand des Rahmensystems in Fahrzeuglängsrichtung gesehen versetzt zur Dämpferbefestigung 8 angeordnet ist. Auf diese Weise verbleibt für einen an der zweiten Rahmeneinheit B festgelegten Schwingungsdämpfer ein größerer Spielraum für Verschwenkbewegung um eine Parallele zur Lagerachse L. Weiterhin ist gezeigt, dass der Befestigungsbereich 52 des zweiten Außenteiles 5 den Stabilisierungsbereich 9 in der Vertikalrichtung deutlich überragt. Mit Vorteil kann dabei der Befestigungsbereich 52 (und auch der Befestigungsbereich 22) jeweils an der Außenseite des Fahrzeugrahmens festgelegt werden, während der Stabilisierungsbereich 9 vorzugsweise dafür ausgelegt ist, an der Unterseite des Fahrzeugrahmens in Eingriff zu gelangen und somit eine Abstützung hauptsächlich in Vertikalrichtung zu gewährleisten.

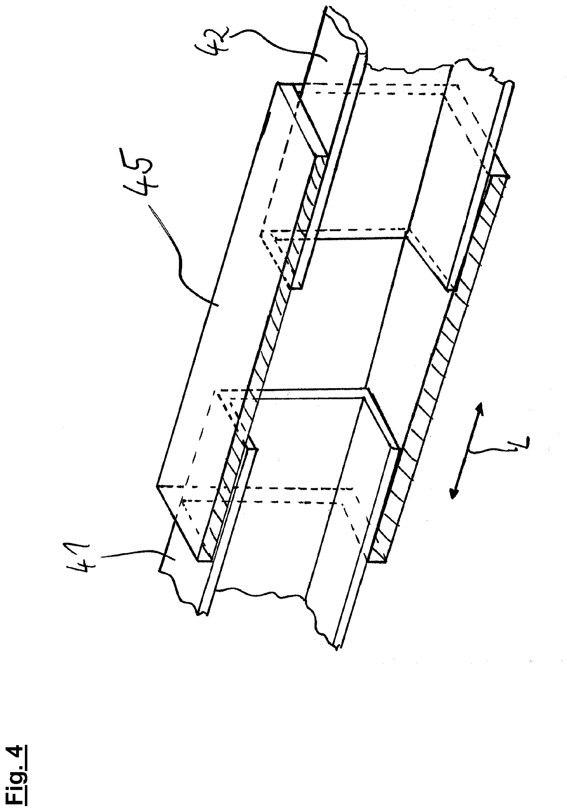

Fig. 4 zeigt eine teilweise geschnittene Detailansicht des Verbindungsbereiches zwischen dem ersten Querbereich 41 und dem zweiten Querbereich 42, wobei ein Verbindungselement 45 zum Einsatz kommt. Bei der in der Figur gezeigten Ausführungsform sind die Querbereiche 41, 42 im Wesentlichen C-förmig ausgebildet, wobei das Verbindungselement 45 vorzugsweise als rechteckiger hohler Quader ausgebildet ist. Dabei ist eine der Seitenflächen des Verbindungselements 45 in dieser Ansicht abgeschnitten, um freien Blick auf den Innenraum des Verbindungselements 45 zu gewähren. Mit Vorteil sind die Querbereiche 41, 42 in das Verbindungselement einschiebbar, wobei an den Außenseiten des Verbindungselements 45 jeweils in Richtung der Lagerachse L gesehen eine Schweißverbindung zwischen dem Verbindungselement 45 und dem jeweiligen Querbereich 41, 42 hergestellt werden kann, um die Querbereiche 41, 42 dauerhaft am Verbindungselement 45 und somit mittelbar aneinander festzulegen.

### Bezugszeichen:

- A: - (erste) Rahmeneinheit
- B: - (zweite) Rahmeneinheit
- 2: - erstes Außenteil
- 22: - Befestigungsbereich
- 24: - äußerer Lagerbereich
- 3: - erstes Innenteil
- 32: - Befestigungsbereich
- 34: - innerer Lagerbereich
- 36: - Flanschabschnitt
- 41: - erster Querbereich
- 42: - zweiter Querbereich
- 43: - Überlappungsbereich
- 45: - Verbindungselement
- 5: - zweites Außenteil
- 52: - Befestigungsbereich
- 54: - äußerer Lagerbereich
- 6: - zweites Innenteil
- 62: - Befestigungsbereich
- 64: - innerer Lagerbereich
- 66: - Flanschabschnitt
- 71: - erster Verstärkungsbereich
- 72: - zweiter Verstärkungsbereich
- 8: - Dämpferbefestigung
- 9: - Stabilisierungsbereich
- L: - Lagerachse

## Patentansprüche

1. Rahmensystem umfassend zwei Rahmeneinheiten (A, B),
umfassend jeweils ein Außenteil (2,5), ein Innenteil (3,6) und einen Querbereich (41,42),
wobei der Querbereich (41,42) und das Außenteil (2,5) sich im Wesentlichen quer zueinander erstrecken und/oder der Querbereich (41,42) und das Innenteil (3,6) sich im Wesentlichen quer zueinander erstrecken,
wobei der Querbereich (41,42) einstückig mit dem Außenteil (2,5) oder mit dem Innenteil (3,6) ausgebildet ist,
wobei das Außenteil (2,5) und/oder das Innenteil (3,6) einen Befestigungsbereich (22, 32, 52, 62) zur Festlegung an einem Fahrzeugrahmen aufweist,
wobei das Außenteil (2,5) einen äußeren Lagerbereich (24,54) und das Innenteil (3,6) einen inneren Lagerbereich (34,64) aufweist,
wobei zwischen dem äußeren und dem inneren Lagerbereich (24, 34, 54, 64) ein Achslenker anordenbar und schwenkbar um eine Lagerachse (L) an den Lagerbereichen (24, 34, 54,64) festlegbar ist,
wobei der Querbereich (41,42) ausgelegt ist, Momente vom Außenteil (2,5) und/oder Innenteil (3,6) um eine Orthogonale zur Lagerachse (L) aufzunehmen,
wobei das Innenteil (3) der ersten Rahmeneinheit (A) und das Innenteil (6) der zweiten Rahmeneinheit (B) zwischen dem Außenteil (2) der ersten Rahmeneinheit (A) und dem Außenteil (5) der zweiten Rahmeneinheit (B) angeordnet sind, und
wobei der Querbereich (41) der ersten Rahmeneinheit (A) und der Querbereich (42) der zweiten Rahmeneinheit (B) mittelbar oder unmittelbar aneinander festlegbar oder festgelegt sind oder einstückig miteinander ausgebildet sind,
wobei der erste Querbereich (41) und der zweite Querbereich (42) einen Überlappungsbereich (43) bilden,
wobei im Überlappungsbereich (43) eine Verbindung zwischen dem ersten und dem zweiten Querbereich (41, 42) herstellbar ist, welche Biegemomente um eine Orthogonale zur Lagerachse (L) überträgt,
**dadurch gekennzeichnet, dass** der Überlappungsbereich (43) eine Erstreckung parallel zur Lagerachse (L) aufweist, die ein 0,02- bis 0,09-faches oder ein 0,1- bis 0,2-faches oder ein 0,21- bis 0,3-faches des maximalen Abstandes der beiden Außenteile (2,5) voneinander ist.

2. Rahmensystem nach Anspruch 1,
wobei die jeweilige Rahmeneinheit (A,B) derart ausgebildet ist, dass der Querbereich (41,42) eine Erstreckung längs oder parallel zur Lagerachse aufweist, die ein zumindest 1,5-faches, vorzugsweise ein 2-4-faches des Abstandes des inneren Lagerbereiches (34,64) vom äußeren Lagerbereich (24,54) ist.

3. Rahmensystem nach einem der vorhergehenden Ansprüche,
wobei die jeweilige Rahmeneinheit (A,B) derart ausgebildet ist, dass das Außenteil (2,5) und/oder das Innenteil (3,6) und/oder der Querbereich (41,42) blechartig ausgebildet sind.

4. Rahmensystem nach einem der vorhergehenden Ansprüche,
wobei die jeweilige Rahmeneinheit (A,B) derart ausgebildet ist, dass das Außenteil (2,5) und/oder das Innenteil (3,6) und/oder der Querbereich (41,42) verstärkte Bereiche mit höherer Wandstärke und geschwächte Bereiche mit geringerer Wandstärke aufweisen.

5. Rahmensystemnach einem der vorhergehenden Ansprüche,
wobei die jeweilige Rahmeneinheit (A,B) derart ausgebildet ist, dass am Außenteil (2,5) und/oder am Innenteil (3,6) eine Dämpferbefestigung (8) vorgesehen ist,
wobei die Dämpferbefestigung (8) zum mittelbaren oder unmittelbaren Eingriff mit einem Schwingungsdämpfer oder Stabilisator ausgebildet ist.

6. Rahmensystemnach einem der vorhergehenden Ansprüche,
wobei die jeweilige Rahmeneinheit (A,B) derart ausgebildet ist, dass vorzugsweise im Bereich einer Dämpferbefestigung (8), das Außenteil (2,5) oder das Innenteil (3,6) einen Stabilisierungsbereich (9) aufweist, welcher den Abstand zwischen dem Außenteil (2,5) und dem Innenteil (3,6) überbrückt und zur stoff- oder formschlüssigen Festlegung am jeweils gegenüberliegenden Teil, Außenteil (2,5) oder Innenteil (3,6), ausgelegt ist.

7. Rahmensystemnach einem der vorhergehenden Ansprüche,
wobei die jeweilige Rahmeneinheit (A, B) derart ausgebildet ist, dass das Außenteil (2,5) und/oder das Innenteil (3,6) und/oder der Querbereich (41,42) einen Verstärkungsbereich (71,72) aufweist, wobei der Verstärkungsbereich (71,72) als einstückiger Abschnitt mit dem Außenteil (2,5) und/oder dem Innenteil (3,6) und/oder dem Querbereich (41,42) ausgebildet ist.

8. Rahmensystem nach Anspruch 7,
wobei ein erster Verstärkungsbereich (71) als abgewinkelter Blechabschnitt im Randbereich des jeweiligen Bauteils, Außenteil (2,5) und/oder Innenteil (3,6) und/oder Querbereich (41,42), ausgebildet ist.

9. Rahmensystemnach einem der vorhergehenden Ansprüche, wobei die jeweilige Rahmeneinheit (A, B) derart ausgebildet ist, dass der Querbereich (41,42) an seinem, dem Außenteil (2,5) abgewandten Ende einen Eingriffsbereich zur unmittelbaren Festlegung am Fahrzeugrahmen aufweist.

10. Rahmensystem nach einem der vorhergehenden Ansprüche,
wobei der erste Querbereich (41) und der zweite Querbereich (42) mittelbar und/oder unmittelbar formschlüssig aneinander festgelegt sind, und wobei ein Verbindungselement (45) vorgesehen ist, welches mit dem ersten Querbereich (41) und mit dem zweiten Querbereich (42) in Eingriff bringbar ist um ein Biegemoment um eine Orthogonale zur Lagerachse (L) vom ersten auf den zweiten Querbereich (41, 42) und umgekehrt zu übertragen.

## Claims

1. Frame system comprising two frame units (A, B),
each comprising an outer part (2, 5), an inner part (3, 6) and a transverse region (41,42),
wherein the transverse region (41,42) and the outer part (2,5) extend substantially transversely to each other and/or the transverse region (41,42) and the inner part (3,6) extend substantially transversely to each other,
wherein the transverse region (41,42) is formed integrally with the outer part (2,5) or with the inner part (3,6),
wherein the outer part (2, 5) and/or the inner part (3, 6) has a fastening region (22, 32, 52, 62) for fixing to a vehicle frame,
wherein the outer part (2,5) has an outer bearing area (24,54) and the inner part (3,6) has an inner bearing area (34,64),
wherein between the outer and inner bearing regions (24, 34, 54, 64) an axle guide can be arranged and can be fixed pivotably about a bearing axis (L) to the bearing regions (24, 34, 54, 64),
wherein the transverse region (41, 42) being designed to absorb moments from the outer part (2, 5) and/or inner part (3, 6) about an orthogonal to the bearing axis (L),
wherein the inner part (3) of the first frame unit (A) and the inner part (6) of the second frame unit (B) are arranged between the outer part (2) of the first frame unit (A) and the outer part (5) of the second frame unit (B), and
wherein the transverse region (41) of the first frame unit (A) and the transverse region (42) of the second frame unit (B) are indirectly or directly fixable or fixed to one another or are formed integrally with one another,
wherein the first transverse region (41) and the second transverse region (42) forming an overlap region (43),
wherein in the overlap region (43) a connection can be produced between the first and the second transverse region (41, 42) which transmits bending moments about an orthogonal to the bearing axis (L),
wherein the overlap region (43) has an extension parallel to the bearing axis (L) which is 0.02 to 0.09 times or 0.1 to 0.2 times or 0.21 to 0.3 times the maximum distance between the two outer parts (2, 5).

2. Frame system according to claim 1,
wherein the respective frame unit (A,B) is formed in such a way that the transverse region (41,42) has an extension along or parallel to the bearing axis which is at least 1.5 times, preferably 2-4 times, the distance of the inner bearing region (34,64) from the outer bearing region (24,54).

3. Frame system according to any one of the preceding claims,
wherein the respective frame unit (A, B) is formed in such a way that
wherein the outer part (2,5) and/or the inner part (3,6) and/or the transverse region (41,42) are of sheet metal-like design.

4. Frame system according to any of the preceding claims,
wherein the respective frame unit (A,B) is formed such that
wherein the outer part (2,5) and/or the inner part (3,6) and/or the transverse region (41,42) have reinforced regions with higher wall thickness and weakened regions with lower wall thickness.

5. Frame system according to any of the preceding claims,
wherein the respective frame unit (A, B) is designed in such a way that
wherein a damper attachment (8) is provided on the outer part (2,5) and/or on the inner part (3,6),
wherein the damper attachment (8) is designed for direct or indirect engagement with a vibration damper or stabilizer.

6. Frame system according to any of the preceding claims,
wherein the respective unit (A,B) is designed in such a way that
wherein, preferably in the region of a damper attachment (8), the outer part (2, 5) or the inner part (3, 6) has a stabilizing region (9) which bridges the distance between the outer part (2, 5) and the inner part (3, 6) and is designed for material-locking or form-fitting attachment to the respective opposite part, outer part (2, 5) or inner part (3, 6).

7. Frame system according to any of the preceding claims,
such that the respective frame unit (A, B) is formed the outer part (2,5) and/or the inner part (3,6) and/or the transverse region (41,42) has a reinforcing region (71,72),
wherein the reinforcing region (71,72) is formed as an integral portion with the outer part (2,5) and/or the inner part (3,6) and/or the transverse region (41,42).

8. Frame system according to claim 7,
wherein a first reinforcing region (71) is formed as an angled sheet metal section in the edge region of the respective component, outer part (2, 5) and/or inner part (3, 6) and/or transverse region (41, 42).

9. Frame system according to one of the preceding claims,
wherein the transverse region (41, 42) has at its end remote from the outer part (2, 5) an engagement region for direct fixing to the vehicle frame.

10. Frame system according to any one of the preceding claims,
wherein the first transverse region (41) and the second transverse region (42) are indirectly and/or directly positively fixed to one another, and
wherein a connecting element (45) is provided which can be brought into engagement with the first transverse region (41) and with the second transverse region (42) in order to transmit a bending moment about an orthogonal to the bearing axis (L) from the first to the second transverse region (41, 42) and vice versa.

## Revendications

1. Système de châssis comprenant deux unités de châssis (A, B), comprenant chacune une partie extérieure (2, 5), une partie intérieure (3, 6) et une zone transversale (41, 42),
dans lequel
la zone transversale (41, 42) et la partie extérieure (2, 5) s'étendent sensiblement transversalement l'une par rapport à l'autre et/ou la zone transversale (41, 42) et la partie intérieure (3, 6) s'étendent sensiblement transversalement l'une par rapport à l'autre,
la zone transversale (41, 42) est réalisée d'un seul tenant avec la partie extérieure (2, 5) ou avec la partie intérieure (3, 6),
la partie extérieure (2, 5) et/ou la partie intérieure (3, 6) présente(nt) une zone de fixation (22, 32, 52, 62) pour la fixation sur un châssis de véhicule, la partie extérieure (2, 5) présente une zone de montage extérieure (24, 54) et la partie intérieure (3, 6) présente une zone de montage intérieure (34, 64),
un bras oscillant d'essieu peut être disposé entre les zones de montage extérieure et intérieure (24, 34, 54, 64) et peut être fixé sur les zones de montage (24, 34, 54, 64) de manière à pouvoir pivoter autour d'un axe de montage (L),
la zone transversale (41, 42) est conçue pour recevoir des couples de la partie extérieure (2, 5) et/ou de la partie intérieure (3, 6) autour d'une orthogonale à l'axe de montage (L),
la partie intérieure (3) de la première unité de châssis (A) et la partie intérieure (6) de la deuxième unité de châssis (B) sont disposées entre la partie extérieure (2) de la première unité de châssis (A) et la partie extérieure (5) de la deuxième unité de châssis (B),
et
la zone transversale (41) de la première unité de châssis (A) et la zone transversale (42) de la deuxième unité de châssis (B) peuvent être fixées ou sont fixées directement ou indirectement l'une à l'autre ou sont réalisées d'un seul tenant l'une avec l'autre,
la première zone transversale (41) et la deuxième zone transversale (42) forment une zone de chevauchement (43),
dans la zone de chevauchement (43), une liaison peut être établie entre les première et deuxième zones transversales (41, 42), laquelle transmet des couples de flexion autour d'une orthogonale à l'axe de montage (L),
**caractérisé en ce que**
la zone de chevauchement (43) présente une extension parallèle à l'axe de montage (L) qui est de 0,02 à 0,09 fois ou de 0,1 à 0,2 fois ou de 0,21 à 0,3 fois la distance maximale entre les deux parties extérieures (2, 5).

2. Système de châssis selon la revendication 1,
dans lequel l'unité de châssis (A, B) respective est réalisée de telle sorte que la zone transversale (41, 42) présente une extension le long ou parallèlement à l'axe de montage qui est d'au moins 1,5 fois, de préférence 2 à 4 fois la distance entre la zone de montage intérieure (34, 64) et la zone de montage extérieure (24, 54).

3. Système de châssis selon l'une des revendications précédentes,
dans lequel l'unité de châssis (A, B) respective est réalisée de telle sorte que la partie extérieure (2, 5) et/ou la partie intérieure (3, 6) et/ou la zone transversale (41, 42) sont de type en tôle.

4. Système de châssis selon l'une des revendications précédentes,
dans lequel l'unité de châssis (A, B) respective est réalisée de telle sorte que la partie extérieure (2, 5) et/ou la partie intérieure (3, 6) et/ou la zone transversale (41, 42) présente(nt) des zones renforcées avec une épaisseur de paroi plus élevée et des zones affaiblies avec une épaisseur de paroi plus faible.

5. Système de châssis selon l'une des revendications précédentes,
dans lequel l'unité de châssis (A, B) respective est réalisée de telle sorte qu'une fixation d'amortisseur (8) est prévue sur la partie extérieure (2, 5) et/ou sur la partie intérieure (3, 6),
la fixation d'amortisseur (8) est réalisée pour s'engager directement ou indirectement avec un amortisseur de vibrations ou avec un stabilisateur.

6. Système de châssis selon l'une des revendications précédentes,
dans lequel l'unité de châssis (A, B) respective est réalisée de telle sorte que, de préférence dans la zone d'une fixation d'amortisseur (8), la partie extérieure (2, 5) ou la partie intérieure (3, 6) présente une zone de stabilisation (9) qui comble la distance entre la partie extérieure (2, 5) et la partie intérieure (3, 6) et qui est conçue pour la fixation par coopération de matière ou de forme sur la partie respectivement opposée qu'est la partie extérieure (2, 5) ou la partie intérieure (3, 6).

7. Système de châssis selon l'une des revendications précédentes,
dans lequel l'unité de châssis (A, B) respective est réalisée de telle sorte que la partie extérieure (2, 5) et/ou la partie intérieure (3, 6) et/ou la zone transversale (41, 42) présente(nt) une zone de renforcement (71, 72),
la zone de renforcement (71, 72) est réalisée sous la forme d'une portion d'un seul tenant avec la partie extérieure (2, 5) et/ou avec la partie intérieure (3, 6) et/ou avec la zone transversale (41, 42).

8. Système de châssis selon la revendication 7,
dans lequel une première zone de renforcement (71) est réalisée sous la forme d'une portion de tôle coudée dans la zone de bordure du composant respectif qu'est la partie extérieure (2, 5) et/ou la partie intérieure (3, 6) et/ou zone transversale (41, 42).

9. Système de châssis selon l'une des revendications précédentes,
dans lequel l'unité de châssis (A, B) respective est réalisée de telle sorte que la zone transversale (41, 42) présente, à son extrémité détournée de la partie extérieure (2, 5), une zone d'engagement pour la fixation directe sur le châssis du véhicule.

10. Système de châssis selon l'une des revendications précédentes,
dans lequel la première zone transversale (41) et la deuxième zone transversale (42) sont fixées l'une à l'autre directement et/ou indirectement par coopération de forme, et
il est prévu un élément de liaison (45) qui peut être mis en prise avec la première zone transversale (41) et avec la deuxième zone transversale (42) afin de transmettre un couple de flexion autour d'une orthogonale à l'axe de montage (L) de la première à la deuxième zone transversale (41, 42) et inversement.
